(19)

Europäisches Patentamt
European Patent Office
Office européen des brevets

(11) **EP 1 802 125 A1**

(12) **EUROPEAN PATENT APPLICATION**
published in accordance with Art. 158(3) EPC

(43) Date of publication:
**27.06.2007 Bulletin 2007/26**

(51) Int Cl.:
**H04N 7/32** *(2006.01)*

(21) Application number: **05778334.2**

(22) Date of filing: **02.09.2005**

(86) International application number:
**PCT/JP2005/016571**

(87) International publication number:
**WO 2006/035584 (06.04.2006 Gazette 2006/14)**

(84) Designated Contracting States:
**DE FR GB**

(30) Priority: **28.09.2004 JP 2004280843**

(71) Applicant: **SONY CORPORATION**
**Minato-ku**
**Tokyo (JP)**

(72) Inventors:
• **SATO, Kazushi**
**c/o SONY CORPORATION**
**Minato-ku, Tokyo (JP)**

• **YAGASAKI, Yoichi**
**c/o SONY CORPORATION**
**Minato-ku, Tokyo (JP)**

(74) Representative: **Smith, Samuel Leonard**
**J.A. Kemp & Co.,**
**14 South Square,**
**Gray's Inn**
**London WC1R 5JJ (GB)**

(54) **ENCODER, ENCODING METHOD, PROGRAM OF ENCODING METHOD AND RECORDING MEDIUM WHEREIN PROGRAM OF ENCODING METHOD IS RECORDED**

(57) The invention is applied to a video camera, an electronic still camera, a monitoring device and the like which record imaging results by motion pictures, in which the optimum mode of an inter prediction mode is detected based on a cost value with an integer pixel precision, and a cost value with a precision less than one pixel in the optimum mode is calculated to detect the optimum mode of intra prediction modes and inter prediction modes.

FIG. 10

**Description**

BACKGROUND OF THE INVENTION

TECHNICAL FIELD

This invention relates to an encoding apparatus, an encoding method, a program for the encoding method and a recording medium which records the program for the encoding method, capable of being applied to a video camera, an electronic still camera, a monitoring device and the like which record imaging results by motion pictures. The invention detects the optimum mode of inter prediction modes based on a cost value with an integer pixel precision, calculates a cost value with a precision less than one pixel in the optimum mode, and detects the optimum mode of intra prediction modes and the inter prediction modes, thereby detecting the optimum mode by simple processing when performing encoding processing of video data by detecting the optimum mode by a cost function.

BACKGROUND ART

Recently, concerning transmission and recording of moving pictures in broadcast stations, homes and the like, an apparatus which transmits and stores video data efficiently by utilizing redundancy of video data is becoming popular. Such apparatus complies with, for example, MPEG (Moving Picture Experts Group) systems and the like, which is configured so that video data is compressed using orthogonal transform such as discrete cosine transform and motion compensation.

An MPEG2 (ISO/IEC 13818-2) which is one of such systems is a system defined as a general-purpose video encoding system, which is defined so as to respond both to an interlaced scan and a progressive scan, and so as to respond both to standard resolution pictures and high definition pictures, thereby widely used for broad applications for professional use and consumer use at present. Specifically, according to the MPEG 2, for example, video data which has the standard resolution with the interlaced scan by 720x480 pixels is compressed into data of a bit rate of 4 to 8 [Mbps], and video data which has the high resolution with the interlaced scan by 1920x1088 pixels is compressed into data of a bit rate of 18 to 22 [Mbps], thereby securing high compression rate with high video quality.

However, the MPEG2 is the high video quality encoding method adapted to broadcasting, and does not respond to a high compression rate encoding method whose amount of code is smaller than the MPEG1. On the other hand, as portable terminals have come into wide use in recent years, increase of needs for the high compression rate encoding method which has smaller amount of code than the MPEG1 can be predicted. Accordingly, the standard of the encoding system by the MPEG4 has been approved as an international standard by ISO/IEC (International Organization for Standardization/International Electrotechnical Commission) 14496-2 on December, 1998.

Also in such system, standardization of H26L (ITU-T Q6/16 VCEG) which intended for video encoding for a television conference at first has progressed, and H26L has become capable of securing high encoding efficiency compared with MEPG2 and MPEG4 though the calculation amount increases compared with MPEG2 and MPEG4. In addition, as one of actions of MPEG4, standardization of an encoding system which applies various functions based on the H26L and secures further higher encoding efficiency has progressed as Joint Model of Enhanced-Compression Video Coding. These systems have been set as the international standard by the name of H264 and MPEG-4 Part 10 (AVC: Advanced Video Coding) on March, 2003.

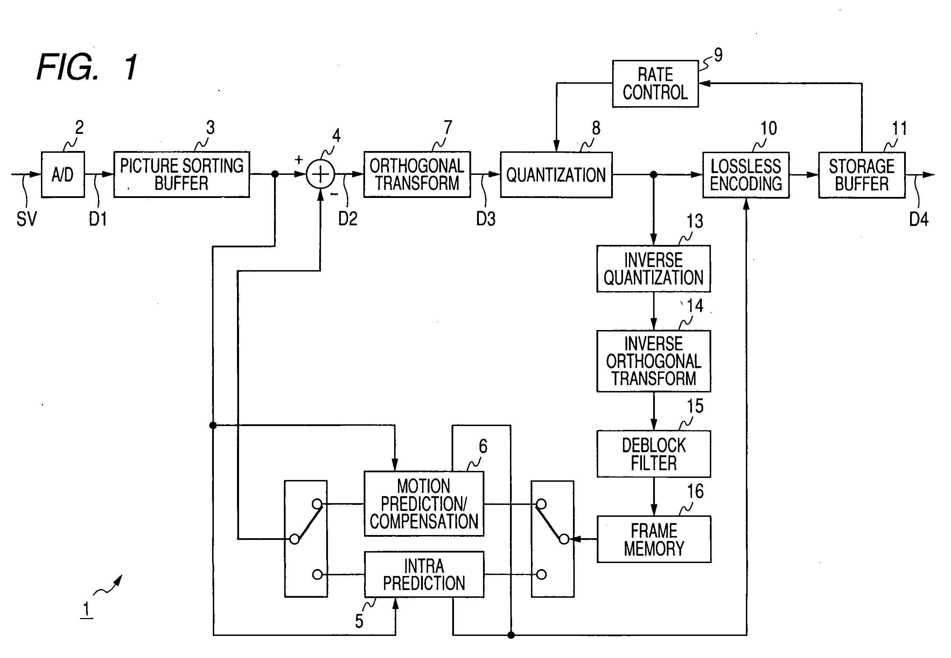

Fig. 1 is a block diagram showing an encoding apparatus based on the AVC. The encoding apparatus 1 selects the optimum prediction mode from plural intra prediction modes and plural inter prediction modes, generates difference data by subtracting a prediction value according to the selected prediction mode from video data, and orthogonal transform processing, quantization processing and variable-length encoding processing are performed on the difference data, thereby performing encoding processing of the video data according to the intra encoding and the inter encoding.

Specifically, in the encoding apparatus 1, an analog-digital conversion circuit (A/D) 2 performs analog-digital processing of a video signal SV to output a video data D1. The video data D1 outputted from the analog-digital conversion circuit 2 is inputted to a picture sorting buffer 3, where frames of the video data D1 are sorted in accordance with a GOP (Group of Pictures) structure relating to the encoding processing of the encoding apparatus 1 to be outputted.

A subtracting circuit 4 receives the video data D1 outputted from the picture sorting buffer 3, and generates and outputs a difference data D2 with respect to a prediction value generated in an intra prediction circuit 5 in the intra encoding, whereas, the subtracting circuit 4 generates and outputs a difference data D2 with respect to a prediction value generated in the motion prediction/compensation circuit 6 in the inter encoding. The output data D2 of the subtracting circuit 4 is inputted to an orthogonal transform circuit 7, where orthogonal transform processing such as discrete cosine transform, Karhunen-Loeve transform is performed to output a transform coefficient data D3 according to the processing result.

A quantization circuit 8 quantizes and outputs the transform coefficient data D3 based on a quantization scale by rate control of a rate control circuit 9. A lossless encoding circuit 10 performs lossless encoding processing of the output data of the quantization circuit 8 by variable-length encoding, arithmetic encoding and the like, and outputs the data. The lossless encoding circuit 10 acquires information concerning the intra prediction mode relating to the intra encoding, information concerning a motion vector relating to the inter encoding and the like from the intra prediction circuit 5 and the motion prediction/compensation circuit 6, and sets these information as header information of an output data D4 to be outputted.

A storage buffer 11 stores the output data D4 of the lossless encoding circuit 10 and outputs it at transmission speed of a sequential transmission channel. The rate control circuit 9 monitors the amount of code generated by the encoding processing by monitoring available capacity of the storage buffer 11 as well as switches the quantization scale in the quantization circuit 8 according to the monitoring result, thereby controlling the amount of code in the encoding apparatus 1.

An inverse quantization circuit 13 performs inverse quantization processing of the output data of the quantization circuit 8, thereby playing the input data of the quantization circuit 8. An inverse orthogonal transform circuit 14 performs inverse orthogonal transform processing of the output data of the inverse quantization circuit 13, thereby playing the input data of the orthogonal transform circuit 7. A deblock filter 15 removes block noise from the output data of the inverse orthogonal transform circuit 14 and outputs the data. A frame memory 16 adds a prediction value generated by the intra prediction circuit 5 or the motion prediction/compensation circuit 6 suitably to the output data of the deblock filter 15 and records the data as reference video information.

Accordingly, the motion prediction/compensation circuit 6 detects motion vectors of video data outputted from the picture sorting buffer 3 based on prediction frames (reference frames) from the reference video information stored in the frame memory 16, and also detects the optimum mode of the inter prediction by performing motion compensation of the reference video information stored in the frame memory 16 by the detected motion vectors. When performing encoding processing by the inter prediction, prediction video information is generated in the optimum mode and a prediction value according to the prediction video information is outputted to the subtracting circuit 4.

The intra prediction circuit 5 detects the optimum mode of the intra prediction mode based on the reference video information stored in the frame memory 16 in the intra encoding. When performing encoding processing by the intra prediction, a prediction value of prediction video information is generated from reference video information in the optimum mode and outputted to the subtracting circuit 4.

According to the above, in the encoding method, a difference data D2 according to motion compensation relating to the inter prediction and a difference data D2 relating to the intra prediction are generated in the inter encoding and the intra encoding respectively, and the orthogonal transform processing, the quantization processing and the variable-length processing are performed on these difference data D2 to be transmitted.

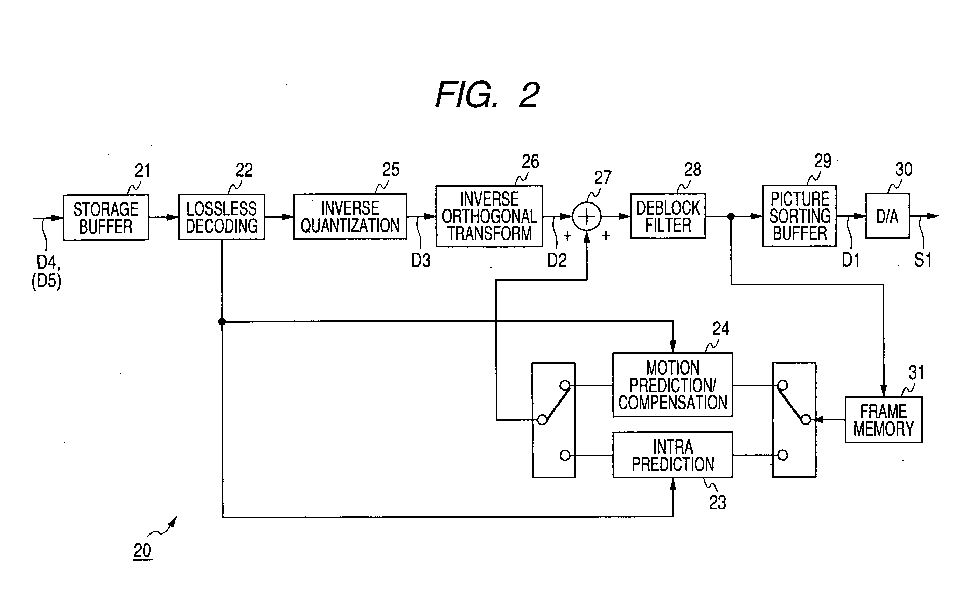

Fig. 2 is a block diagram showing a decoding apparatus which performs decoding processing of the encoded data D4 encoded as the above. In a decoding apparatus 20, a storage buffer 21 temporarily stores the encoded data D4 inputted through the transmission channel and outputs it. A lossless decoding circuit 22 performs decoding processing of the outputted data of the storage buffer 21 by variable-length decoding, arithmetic decoding and the like, and plays input data of the lossless encoding circuit 10 in the encoding apparatus 1. In the case that the output data is the intra-encoded data at this time, information of the intra prediction mode stored in the header is decoded to be transmitted to an intra prediction circuit 23, whereas in the case that the output data is the inter encoded data, information concerning motion vectors stored in the header is decoded to be transferred to a motion prediction/compensation circuit 24.

An inverse quantization circuit 25 performs inverse quantization processing of the output data of the lossless decoding circuit 22, thereby playing the transform coefficient data D3 inputted to the quantization circuit 8 of the encoding apparatus 1. An inverse orthogonal transform circuit 26 receives transform coefficient data outputted from the inverse quantization circuit 25, performs fourth-order inverse orthogonal transform processing of the data, thereby playing the difference data D2 inputted to the orthogonal transform circuit 7 of the encoding apparatus 1.

An adder 27 receives the difference data D2 outputted from the inverse orthogonal transform circuit 26 and adds a prediction value according to prediction video generated in the intra prediction circuit 23 to output the data in the intra encoding, whereas, the adder 27 adds a prediction value according to prediction video outputted from the motion prediction/compensation circuit 24 to output the data in the inter encoding. Accordingly, the adder 27 plays input data of the subtracting circuit 4 in the encoding apparatus 1.

A deblock filter 28 removes block noise from output data of the adder 27 to output the data, and a picture sorting buffer 29 sorts frames of video data outputted from the deblock filter 28 in accordance with the GOP structure to output the data. A digital analog conversion circuit (D/A) 30 performs digital analog processing of the output data of the picture sorting buffer 29 to output the data.

A frame memory 31 records and stores the output data of the deblock filter 28 as reference video information. A motion prediction/compensation circuit 24 generates a prediction value according to prediction video by performing motion compensation of reference video information stored in the frame memory 31 based on information of motion vectors notified from the lossless decoding circuit 22 in the inter encoding, and outputs the prediction value to the adder 27. The intra prediction circuit 23 generates a prediction value according to prediction video from the reference video information stored in the frame memory 31 based on the intra prediction mode notified from the lossless decoding circuit 22 in the intra encoding, and outputs the prediction value to the adder 27.

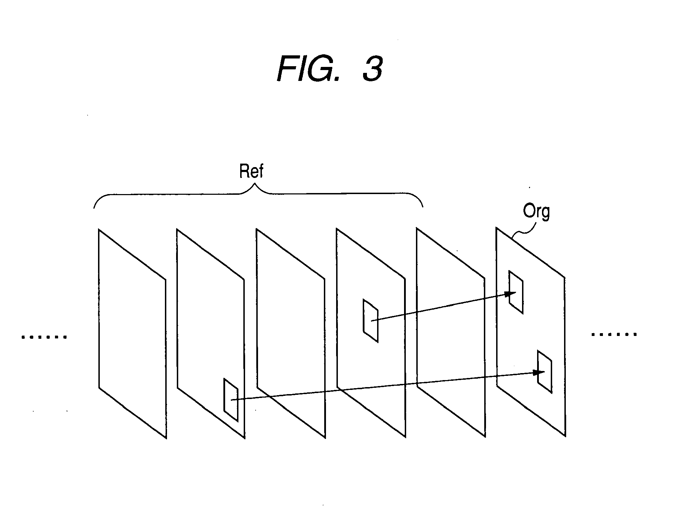

In the above inter encoding by the AVC system, according to Multiple Reference Frames, motion compensation for a frame Org as a processing target can be performed by selecting any of plural reference frames Ref, as shown in Fig. 3. Accordingly, when a portion corresponding to a motion compensation block is hidden in a preceding frame, further, even when all pixel values are changed temporarily in the preceding frame due to a flash and the like, motion compensation is performed with high precision to improve data compression efficiency.

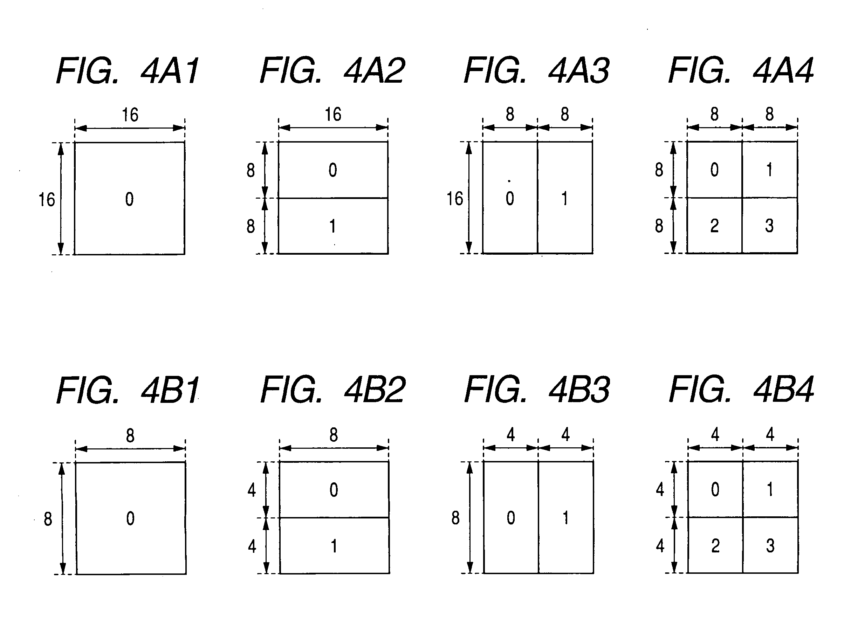

Concerning a block relating to the motion compensation, motion compensation is performed based on a block of 16 pixelsx16 pixels as shown in Fig. 4A1, however, tree-structured motion compensation is supported by the variable MC Block Size, therefore, the macroblock of 16 pixels$\times$16 pixels is divided into two in a horizontal direction and/or a vertical direction as shown in Fig. 4A2 to 4A4, and motion compensation can be performed by setting the motion vector and the reference frame independently according to sub-macroblocks of 16 pixels$\times$8 pixels, 8 pixels$\times$16 pixels and 8 pixels$\times$8 pixels. In addition, the sub-macroblock of 8 pixels$\times$8 pixels is further divided into sub-macroblocks of 8 pixels$\times$8 pixels, 8 pixels$\times$4 pixels, 4 pixels$\times$8 pixels, and 4 pixels$\times$4 pixels, as shown in Fig. 4B1 to Fig. 4B4, and the motion compensation can be performed by setting the motion vector and the reference frame independently.

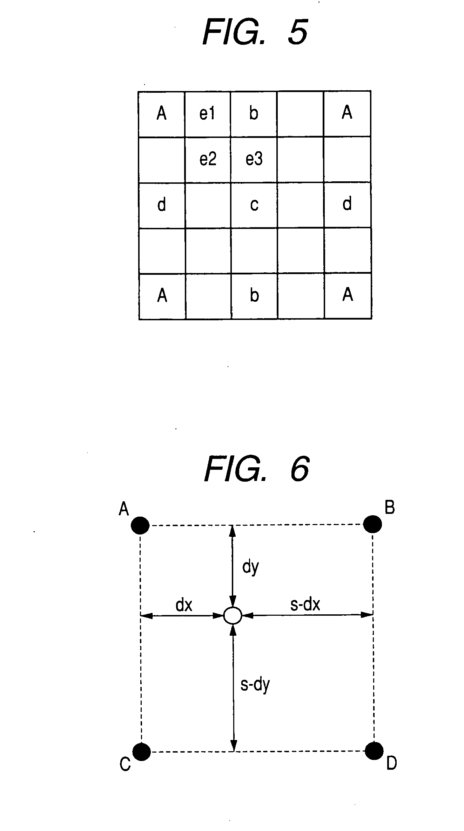

The motion compensation is set so as to compensate with a 1/4 pixel precision using a 6-tap FIR filter. Accordingly, in Fig. 5, for allowing a sign "A" to represent a pixel value of 1 pixel precision, allowing signs "b" to "d" to represent a pixel value of 1/2 pixel precision and allowing signs "el" to "e3 to represent a pixel value of 1/4 pixel precision, the motion prediction/compensation circuit 6, at first, performs weighting of respective tap inputs of the 6-tap FIR filter by values 1, -5, 20, 20, -5, and 1 to execute calculation processing of the following expression, thereby calculating the pixel value "b" or "d" with 1/2 pixel precision between continuous pixels in the horizontal direction or the vertical direction.

$$F = A_{-2} - 5 \cdot A_{-1} + 20 \cdot A_0 + 20 \cdot A_1 - 5 \cdot A_2 + A_3$$

$$b, d = Clip1 \left( \left( F + 16 \right) \gg 5 \right) \quad \cdots\cdots \ (1)$$

By using the pixel value "b" or "d" with 1/2 pixel precision thus calculated, weighting of respective tap inputs of the 6-tap FIR filter is performed by values 1, -5, 20, 20, -5, and 1 to execute calculation processing of the following expression, thereby calculating a pixel value "c" with 1/2 pixel precision between continuous pixels in the horizontal direction or the vertical direction.

$$F = b_{-2} - 5 \cdot b_{-1} + 20 \cdot b_0 + 20 \cdot b_1 - 5 \cdot b_2 + b_3$$

or

$$F = d_{-2} - 5 \cdot d_{-1} + 20 \cdot d_0 + 20 \cdot d_1 - 5 \cdot d_2 + d_3$$

$$\cdots\cdots \ (2)$$

$$c = Clip1 \left( \left( F + 512 \right) \gg 10 \right)$$

Furthermore, by using pixel values "b" to "d" with 1/2 pixel precision thus calculated, calculation processing of the following expression by linear interpolation is performed, thereby calculating pixel values e1 to e3 with 1/4 pixel precision. It should be noted that normalization processing relating to weighting addition in the expression (1) and the expression (2) is performed after all linear interpolation processing in the horizontal direction and in the vertical direction has been completed.

$$e_1 = (A + b + 1) \gg 1$$

$$e_2 = (b + d + 1) \gg 1 \quad \text{......} \quad (3)$$

$$e_3 = (b + c + 1) \gg 1$$

On the other hand of the above processing of motion compensation with respect to a luminance signal, motion compensation with respect to a color-difference signal is performed by linear interpolation. Specifically, as shown in Fig. 6, a pixel value "v" is represented by the following expression, which is set at a sampling point relating to respective internal dividing ratios dx, s-dx and dy, s-dy in the horizontal direction and the vertical direction with respect to neighboring pixels A to D according to a pixel pitch "s".

$$v = \frac{(s-dx)(s-dy) A + dx(s-dy) B + (s-dx) dy C + dx\, dy\, D}{s^2} \quad \text{......} \quad (4)$$

In the AVC, concerning the above information of motion vectors as information of encoding relating to the inter prediction, the amount of data transmission is reduced by efficiently utilizing correlations between continuous macroblocks or sub-macroblocks. Specifically, in the AVC encoding, it is possible to perform motion compensation respectively by dividing one macroblock into plural sub-macroblocks, therefore, the amount of code increases. Accordingly, a prediction motion vector pmv is generated at each block in the horizontal direction component and the vertical direction component respectively by median prediction, and motion vector information MVD (Motion Vector Data) of a difference value calculated by calculation processing represented by the following expression between the prediction motion vector pmv and an actual motion vector mv is encoded and transmitted.

$$MVD_i = mv_i - pmv_i; i = 0,1 \quad \text{......} \quad (5)$$

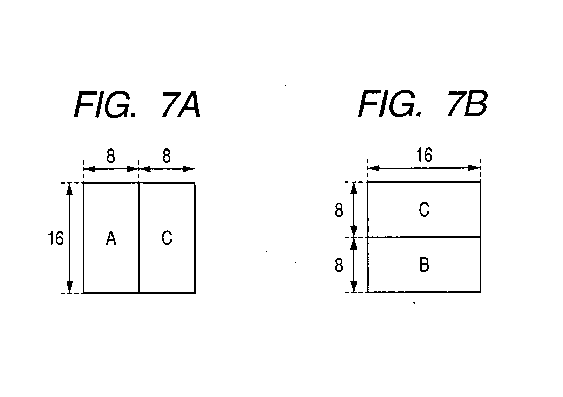

However, as shown in Fig. 7A, when a block relating to the motion vector mv is a sub-macroblock "C" which is in the right side of two sub-macroblocks formed by dividing one macroblock into two in the horizontal direction and a reference frame refIdxE relating to detection of the prediction motion vector mv is equivalent to a reference frame refIdxA of a sub-macroblock "A" adjacent in the remaining left side, a motion vector mvA detected in the sub-macroblock "A" adjacent in the left side is set as the prediction motion vector pmv as shown by the following expression.

$$pmv = mv_A 5 \quad \text{......} \quad (6)$$

Conversely, when a block relating to the motion vector mv is the sub-macroblock "A" in the left side, and the reference frame refIdxE relating to detection of the prediction motion vector mv is equivalent to a reference frame refIdxC of a sub-macroblock "C" adjacent in the remaining right side, a motion vector mvC detected in the sub-macroblock "C" adjacent in the right side is set as the prediction motion vector pmv as shown by the following expression.

$$pmv = mv_C \quad \text{......} \quad (7)$$

As shown in Fig. 7B, when a block relating to the motion vector mv is a sub-macroblock "C" which is in the upper side of two sub-macroblocks formed by dividing one macroblock into two in the vertical direction, and a reference frame refIdxE relating to detection of the prediction motion vector mv is equivalent to a reference frame refIdxA of a sub-macroblock "B" adjacent in the remaining lower side, a motion vector mvB detected in the sub-macroblock "B" is set as the prediction motion vector pmv as shown by the following expression.

$$pmv = mv_B \qquad\qquad ...... \ (8)$$

Conversely, when a block relating to the motion vector mv is the sub-macroblock "B" in the lower side, and the reference frame refIdxE relating to detection of the prediction motion vector mv is equivalent to the reference frame refIdxA of a sub-macroblock "A" adjacent in the remaining upper side, a motion vector mvA detected in the sub-macroblock "A" is set as the prediction motion vector pmv as shown by the following expression.

$$pmv = mv_A \qquad\qquad ...... \ (9)$$

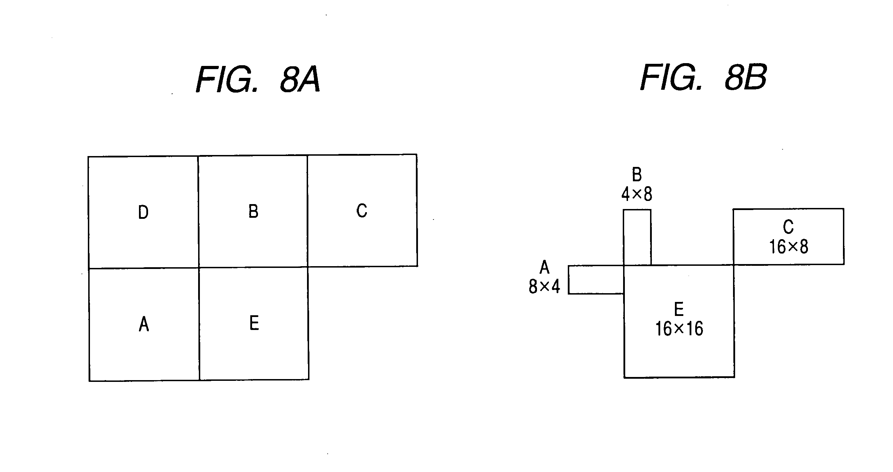

In the case other than the above, as shown in Fig. 8A, a prediction motion vector pmv is generated for a block E relating to motion compensation by motion vectors detected in the adjacent blocks. In this case, the adjacent blocks are a block "A" which is adjacent in the scanning start side of the horizontal direction by a raster scanning, a block "B" which is adjacent in the scanning start side of the vertical direction by the raster scanning, and blocks "C", "D" of right and left of the block. The setting of the prediction motion vector pmv by these adjacent blocks is applied when the adjacent blocks are sub-macroblocks as shown in Fig. 8B, or even when a process target block is a sub-microblock.

Specifically, according to values of reference frame indexes refIdxA, refIdxB and refIdxC relating to detection in respective neighboring blocks, when there is an adjacent block whose reference frame coincides with the reference frame of the block E relating to motion compensation, a motion vector mvN according to the adjacent block (N=A or B or C) whose reference frame coincides is set as the prediction motion vector pmv by the following expressions.

$$mv_B = mv_A$$

$$mv_C = mv_A$$

$$refIdx_B = refIdx_A$$

$$refIdx_C = refIdx_A \qquad\qquad ...... \ (10)$$

In the case other than the above, concerning respective components in the vertical direction and the horizontal direction, components by processing results using a median filter are set as respective components of the prediction motion vector pmv in the following expression.

$$pmv = mv_N \qquad\qquad ...... \ (11)$$

When either the block "B" which is adjacent in the vertical direction or the block "C" which is next to the block "B" is not significant, and when the block "A" which is adjacent in the horizontal direction is significant, the motion vector mvA according to the block "A" and the reference frame index refIdxA are substituted for the motion vector mv and the reference frame index refIdx of these adjacent blocks "B" and "C" in the vertical direction as shown by the following expression.

$$pmv = Median \ (mv_A, \ mv_B, \ mv_C) \qquad\qquad ...... \ (12)$$

Furthermore, in the AVC, in the B picture, a direct mode including a temporal (time) direct mode and a spatial (space) direct mode is provided, and transmission of information concerning the motion vector is stopped in the direct mode to improve encoding efficiency.

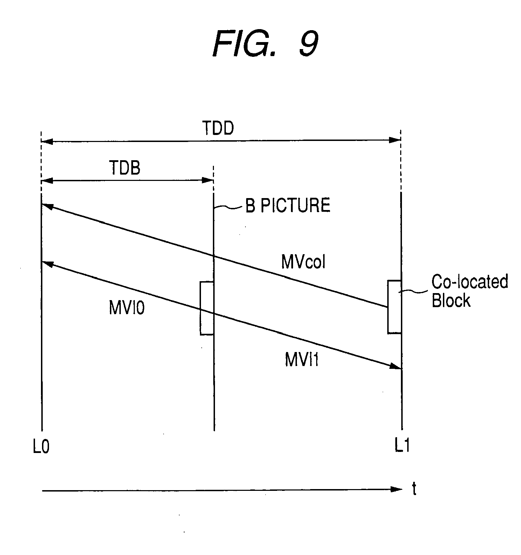

Accordingly, in the spatial direct mode, decoding processing is executed by setting the prediction motion vector pmv as the motion vector. On the other hand, in the temporal direct mode, motions vectors MV10 and MV11 relating to the B picture of the process target are created by the linear interpolation using a motion vector mvcol of a block (Co-Located Block) to which a prediction frame L1 whose encoding processing has been completed correspond, on the assumption that motion is linear, as shown in Fig. 9. In the AVC video compression information, a parameter TD relating to time information between the pictures L0 and L1 does not exist, therefore, a POC (Picture Order Count) is used instead of that.

In the AVC, concerning prediction modes relating to these intra and inter predictions, High Complexity Mode assuming the multipass encoding and Low Complexity Mode assuming the 1-pass encoding are defined according to Joint Model (AVC reference encoding system) relating to the AVC, and the optimum mode is selected following these definition to execute encoding processing. In the Low Complexity Mode in these modes, a cost function showing encoding efficiency is defined by the following expression, and the optimum mode is detected by comparison of cost values (Mode) obtained by the cost function.

$$\mathtt{Cost\ (Mode)=SA(T)D+SA(T)D_0} \qquad \cdots \cdots$$

In the above, SA(T) D is an error value between an original picture and a prediction picture, and the sum of absolute values of errors in difference values of pixel values between the original picture and the prediction picture is applied. SA(T)D0 is an offset value which is given to the error value SA(T)D, based on the cost to be the weight at the time of deciding a header bit and a mode, and the amount of data for transmission of additional information such as the motion vector is shown.

Specifically, the sum of absolute values of errors SAD is represented by the following expression with respect to each macroblock, and the difference value between the original picture and the prediction picture in each prediction mode Mode is applied.

$$\mathtt{SAD} = \sum_{i=0}^{15}\sum_{j=0}^{15} \left| \mathtt{Org(\ i\ ,j)-Pred(Mode\ ,i\ ,j\ )} \right| \qquad \cdots\cdots \ (14)$$

Instead of the sum of absolute value errors SAD by the expression (14), it is also preferable to use the difference additional value SATD (Mode) obtained by the following expression.

$$\mathtt{SATD(mode)} = \sum_{i=0}^{15}\sum_{j=0}^{15} \left| \mathtt{Hadamard\ (Org(\ i\ ,j\ )- Pred(Mode\ ,i\ ,j\ ))} \right| \cdots\cdots \ (15)$$

Hadamard ( ) denotes Hadamard transform operation in which a target matrix is multiplied by an Hadamard transform matrix as shown by the following expression. The Hadamard transform matrix is represented by an expression (17), and $H^T$ is a transposed matrix of the Hadamard transform matrix.

$$\mathtt{Hadamard\ (A)} = H^T A H \qquad\qquad \cdots\cdots \ (16)$$

$$H = \begin{pmatrix} 1 & 1 & 1 & 1 \\ 1 & -1 & 1 & -1 \\ 1 & 1 & -1 & -1 \\ 1 & -1 & -1 & 1 \end{pmatrix} \qquad \cdots\cdots (17)$$

The offset value SA(T) D0 is represented by the following expression in a forward-direction prediction mode. In this expression, QPO (QP) is a function which transforms a quantization parameter QP into a quantization scale, MVDFW is a motion vector relating to the forward-direction prediction, and "Bit to code" is the amount of code on a bit stream relating to the motion vector.

$$SA(T)D_0$$

$$= QP_0(QP) \cdot (2 \times \text{code\_number\_of\_ref\_idx\_fwd} + Bit\_to\_code\_MVDFW) \cdots\cdots (18)$$

The offset value SA(T) D0 is represented by the following expression in a backward prediction mode. In this expression, MVDBW is a motion vector relating to the backward-direction prediction.

$$SA(T)D_0 = QP_0(QP) \times Bit\_to\_code\_MVDBW \qquad \cdots\cdots (19)$$

The offset value SA(T) D0 is represented by the following expression in a bi-directional prediction mode. In this expression, Bit to code forward Blk size, Bit to code backward Blk size are the amount of code on bit streams necessary for transmission of information concerning motion compensation blocks relating to the forward-direction prediction and the backward-direction prediction respectively.

$$SA(T)D_0 =$$

$$QP_0(QP) \times (2 \times \text{code\_number\_of\_ref\_idx\_fwd} + Bit\_to\_code\_forward\_Blk\_size$$

$$+ Bit\_to\_code\_backward\_Blk\_size + Bit\_to\_code\_MVDFW$$

$$+ Bit\_to\_code\_MVDBW) \qquad \cdots\cdots (20)$$

In the direct mode, the offset value SA(T)DO is calculated by the following expression.

$$SA(T)D_0 = -16 \times QP_0(QP) \qquad \cdots\cdots (21)$$

In the intra $4 \times 4$ prediction mode, the offset value SA(T)DO is calculated by the following expression.

$$SA(T)D_0 = 24 \times QP_0(QP) \qquad \cdots\cdots (22)$$

In this connection, the cost function is also applied to search for the motion vector, and the motion vector which allows the cost value Cost to be minimum is detected as shown by the following expression.

$$\mathrm{Cost} = \mathrm{SA(T)D} + \mathrm{SA(T)D_0}$$

$$\mathrm{SA(T)D_0}$$

$$= \mathrm{QP_0(QP)} \cdot (\mathrm{Bits\_to\_code\_vector} + 2 \times \mathrm{code\_number\_of\_ref\_idex\_fwd}) \quad \cdots\cdots \quad (23)$$

As described above, when the optimum mode is detected in the Low Complexity Mode, in the encoding apparatus 1, cost values Cost in all prediction modes in the intra encoding and the inter encoding are calculated respectively by using a luminance signal in the intra prediction circuit 5 and the motion prediction/compensation circuit 6, and the optimum mode of the luminance signal is detected by selecting the prediction mode in which the cost value Cost is minimum. According to the detection, when the intra encoding is selected, cost values in respective intra prediction modes with respect to a color-difference signal are calculated, and the intra prediction mode having the minimum cost value is set as the optimum mode of the color-difference signal by the comparison of calculation results. In the case that encoding processing is performed by the inter prediction by the judgment of the cost value according to the luminance signal, motion compensation of the color-difference signal is performed by the motion compensation block, the motion vector and the reference frame according to the luminance signal. Accordingly, in the AVC, the optimum mode is detected from plural intra prediction modes and plural inter prediction modes at each macroblock, and video data is processed according to the optimum mode to efficiently encode the video data.

Concerning the selection of the prediction mode by the cost function, various devices are disclosed in, for example, JP-A-2003-230149 and the like.

In the detection of the optimum mode relating to the inter encoding, it becomes necessary that motion compensation is performed with respect to all prediction modes of the above $4 \times 4$ prediction mode, $16 \times 16$ prediction mode and the like by the 6-tap FIR filter and cost values are calculated respectively, which causes a problem that enormous calculation processing is required for deciding the optimum mode.

DISCLOSURE OF THE INVENTION

The invention is made in view of the above and intends to propose an encoding apparatus, an encoding method, a program for the encoding method and a recording medium which records the program for the encoding method which are capable of detecting the optimum mode by simple processing when performing encoding processing of video data by detecting the optimum mode using the cost function.

In order to solve the problems, the invention is applied to an encoding apparatus which detects the optimum mode used for encoding processing from plural intra prediction modes and plural inter prediction modes at each macroblock by comparison of cost values according to a cost function indicating encoding efficiency, and performs encoding processing of video data in the optimum mode, which includes a rough motion prediction circuit detecting a motion vector with an integer pixel precision and calculating the cost value in a rough motion compensation position by the motion vector in each inter prediction mode, an inter mode decision circuit detecting the optimum mode in the plural inter prediction modes based on the cost value in the rough motion compensation position, a minute motion prediction circuit calculating the cost value by performing motion compensation with a precision less than one pixel with respect to the optimum mode detected by the inter mode decision circuit and an intra/inter mode decision circuit detecting the optimum mode used for the encoding processing by comparison of the cost value by the minute motion prediction circuit and the cost value by the plural intra prediction modes.

According to the configuration of the invention, by being applied to an encoding apparatus which detects the optimum mode used for encoding processing from plural intra prediction modes and plural inter prediction modes at each macroblock by comparison of cost values according to a cost function indicating encoding efficiency and performs encoding processing of video data in the optimum mode, and by allowing the encoding apparatus to include a rough motion prediction circuit detecting a motion vector with an integer pixel precision and calculating the cost value in a rough motion compensation position by the motion vector in each inter prediction mode, an inter mode decision circuit detecting the optimum mode in the plural inter prediction modes based on the cost value in the rough motion compensation position, a minute motion prediction circuit calculating the cost value by performing motion compensation with a precision less than one pixel with respect to the optimum mode detected by the inter mode decision circuit and an intra/inter mode decision circuit detecting the optimum mode used for the encoding processing by comparison of the cost value by the minute motion prediction circuit and the cost value by the plural intra prediction modes, it is merely necessary to calculate the cost value with the precision less than one pixel only for the optimum mode of the inter prediction mode without calculating the cost value by performing motion compensation with the precision less than one pixel with respect to all inter prediction modes, thereby detecting the optimum mode by simple processing when video data is encoded by detecting the optimum mode using the cost function.

Also, the invention is applied to an encoding method which detects the optimum mode used for encoding processing from plural intra prediction modes and plural inter prediction modes at each macroblock by comparison of cost values according to a cost function indicating encoding efficiency, and performs encoding processing of video data in the optimum mode, which includes a rough cost value calculation step detecting a motion vector with an integer pixel precision and calculating the cost value in a rough motion compensation position by the motion vector in each inter prediction mode, an inter mode decision step detecting the optimum mode in the plural inter prediction modes based on the cost value in the rough motion compensation position, a minute cost value calculation step calculating the cost value by performing motion compensation with a precision less than one pixel with respect to the optimum mode detected by the inter mode decision step and an intra/inter mode decision step detecting the optimum mode used for the encoding processing by comparison of the cost value by the minute cost value calculation step and the cost value by the plural intra prediction modes.

According to the configuration of the invention, it is possible to provide an encoding method which is capable of detecting the optimum mode by simple processing when encoding processing of video data is performed by detecting the optimum mode by the cost function.

Also, the invention is applied to a program for an encoding method including an optimum mode detecting step detecting the optimum mode from plural intra prediction modes and plural inter prediction modes at each macroblock by comparison of cost values according to a cost function indicating encoding efficiency, and an encoding processing step performing encoding processing of video data in the optimum mode, in which the optimum mode detecting step includes a rough cost value calculation step detecting a motion vector with an integer pixel precision and calculating the cost value in a rough motion compensation position by the motion vector in each inter prediction mode, an inter mode decision step detecting the optimum mode in the plural inter prediction modes based on the cost value in the rough motion compensation position, a minute cost value calculation step calculating the cost value by performing motion compensation with a precision less than one pixel with respect to the optimum mode detected by the inter mode decision step and an intra/inter mode decision step detecting the optimum mode used for the encoding processing by comparison of the cost value by the minute cost value calculation step and the cost value by the plural intra prediction modes.

According to the configuration of the invention, it is possible to provide a program for an encoding method which is capable of detecting the optimum mode by simple processing when encoding processing of video data is performed by detecting the optimum mode by the cost function.

Also, the invention is applied to a recording medium which records a program for an encoding method executed by a calculation processing means, in which the program for the encoding method includes an optimum mode detecting step detecting the optimum mode from plural intra prediction modes and plural inter prediction modes at each macroblock by comparison of cost values according to a cost function indicating encoding efficiency and an encoding processing step performing encoding processing of video data in the optimum mode, and in which the optimum mode detection step includes a rough cost value calculation step detecting a motion vector with an integer pixel precision and calculating the cost value in a rough motion compensation position by the motion vector in each inter prediction mode, an inter mode decision step detecting the optimum mode in the plural inter prediction modes based on the cost value in the rough motion compensation position, a minute cost value calculation step calculating the cost value by performing motion compensation with a precision less than one pixel with respect to the optimum mode detected by the inter mode decision step and an intra/inter mode decision step detecting the optimum mode used for the encoding processing by comparison of the cost value by the minute cost value calculation step and the cost value by the plural intra prediction modes.

According to the configuration of the invention, it is possible to provide a recording medium which records a program for an encoding method which is capable of detecting the optimum mode by simple processing when encoding processing of video data is performed by detecting the optimum mode by the cost function.

According to the invention, the optimum mode can be detected by simple processing when encoding processing of video data is performed by detecting the optimum mode by the cost function.

BRIEF DESCRIPTION OF THE DRAWINGS

Fig. 1 is a block diagram showing an encoding apparatus of an AVC system.

Fig. 2 is a block diagram showing a decoding apparatus of the AVC system.

Fig. 3 is a schematic view used for explanation of reference frames of the AVC system.

Fig. 4A1 to 4B4 are schematic views used for explanation of motion compensation of the AVC system.

Fig. 5 is a schematic view used for explanation of motion compensation precision of the AVC system.

Fig. 6 is a schematic view used for explanation of motion compensation of a color-difference signal.

Fig. 7A and Fig. 7B are schematic views used for explanation of a prediction value of the motion vector relating to a sub-macroblock.

Fig. 8A to Fig. 8B are schematic views used for explanation of a prediction value of the motion vector according to other examples.

Fig. 9 is a schematic view used for explanation of a temporal direct mode.

Fig. 10 is a block diagram showing an encoding apparatus according to an embodiment 1 of the invention.

Fig. 11 is a plan view used for explanation of calculation of an estimation value.

Fig. 12 is a schematic view used for calculation of the estimation value by a linear function.

Fig. 13 is a flowchart showing processing procedures of detecting the optimum mode in the encoding apparatus of Fig. 10.


BEST MODE FOR CARRYING OUT THE INVENTION

Hereinafter, embodiments of the invention will be described appropriately with reference to the drawings.

(1) Configuration of the embodiment

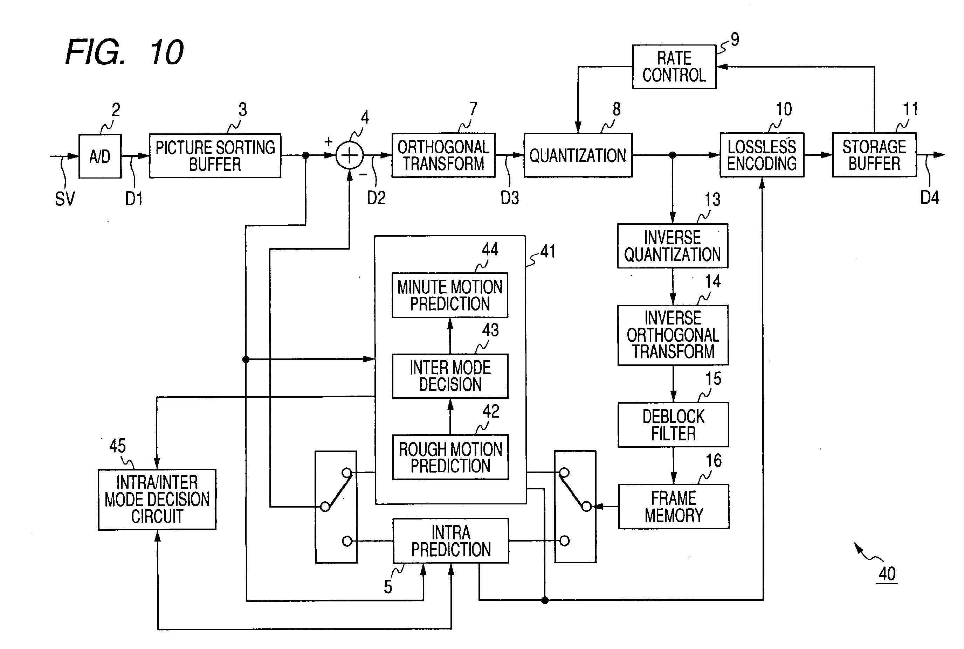

Fig. 10 is a block diagram showing an encoding apparatus according to an embodiment of the invention. In an encoding apparatus 40, the same configurations as the encoding apparatus 1 described above with reference to Fig. 1 are shown by putting corresponding numerals and repeated explanations are omitted.

Accordingly, in an encoding apparatus 40, the intra prediction circuit 5 calculates a cost value Cost (Mode) by the cost function described relating to the expression (13) with respect to all intra prediction modes of the luminance signal in a unit of a macroblock. The intra prediction modes calculated as the above are all modes of 4x4 prediction mode, 16×16 prediction mode and the like. The intra prediction circuit 5 notifies calculated cost values of the all prediction modes to an intra/inter mode decision circuit 45. According to the notification of the cost values, when intra encoding is instructed and the optimum mode is designated by the intra/inter mode decision circuit 45, a prediction value of the luminance signal is generated in the optimum mode to be outputted to a subtracting circuit 4. Concerning the color-difference signal, the optimum mode is detected by calculation and comparison of cost values, and a prediction value of the color-difference signal is outputted to the subtracting circuit 4 in the optimum mode.

A motion prediction/compensation circuit 41 detects motion vectors of video data outputted from the picture sorting buffer 3 based on prediction frames (reference frames) according to reference video information stored in the frame memory 16. In addition, cost values are calculated by performing motion compensation of the reference video information stored in the frame memory 16 by compensated positions according to the detected motion vectors as well as the minimum value is detected based on the cost values, thereby detecting the optimum mode of inter predictions other than a direct mode. When encoding processing is executed by inter prediction, prediction video information is generated by the optimum mode, and a prediction value according to the prediction video information is outputted to the subtraction circuit 4.

In the motion prediction/compensation circuit 41, a rough motion prediction circuit 42 detects motion vectors in all inter prediction modes with integer pixel precision, and calculates cost values of rough motion vector positions based on the motion vectors. Specifically, the rough motion prediction circuit 42 detects motion vectors by performing motion compensation according to precision of one pixel in all inter prediction modes of the luminance signal. All inter prediction modes are respective modes other than the direct mode, accordingly, the rough motion prediction circuit 42 predicts motion with respect to all reference frames, all motion compensation blocks including the macroblock and sub-macroblocks, and combinations of all prediction directions including forward-direction prediction, backward-direction prediction and bi-directionnal prediction, thereby detecting motion vectors with the integer pixel precision.

The rough motion prediction circuit 42 calculates cost values Cost (Mode) by the above described cost function relating to the expression (13) as a unit of the macroblock in all inter prediction modes by using the motion vectors with the integer pixel precision and output them. In this case, the cost value is represented by the following expression. Hereinafter, the cost value according to rough motion compensation position is appropriately referred to as a rough cost value.

$$\text{Cost\_int(Mode)=SA(T)D+QP2Quant·MV\_intBit(Mode)} \quad \text{......} \quad (24)$$

Here, "MV intBit(Mode)" is the amount of code required for transmission of motion vector information by the prediction motion vector pmv described with reference to Fig. 7 and Fig. 8, and it is necessary to generate the prediction motion vector pmv based on motion vector values of neighboring blocks for calculation of the amount of code. When neighboring blocks A to C in Fig. 8 are macroblocks in this case, the optimum mode has been detected and encoded in these neighboring blocks A to C, therefore, the prediction motion vector pmv can be set.

However, in the case that these neighboring blocks A to C belong to the same macroblock as a block E of a processing target, since the optimum mode has not been decided in these neighboring blocks A to C, motion vectors have not been fixed. Accordingly, in this case, a motion vector value "mv intX" detected with the integer pixel precision by the rough motion prediction circuit 42 is set as a prediction motion vector "pmv int" in the processing target block, accordingly, a pseudo prediction motion vector pmv is generated and the cost value Cost (Mode) is calculated.

Furthermore, the rough motion prediction circuit 42 detects, in addition to the rough cost value according to the rough motion compensation position, cost values of neighbors of the rough motion compensation position, that is, neighboring compensation positions with the motion compensation precision relating to the rough motion compensation position and output them in the same way. Specifically, in the embodiment, since the motion compensation precision is one pixel, the rough motion prediction circuit 42 compensates motion in the same way by changing values of X-direction components and Y-direction components of the motion vector relating to the rough motion compensation position by $\pm 1$ pixel to calculate cost values Cost (Mode).

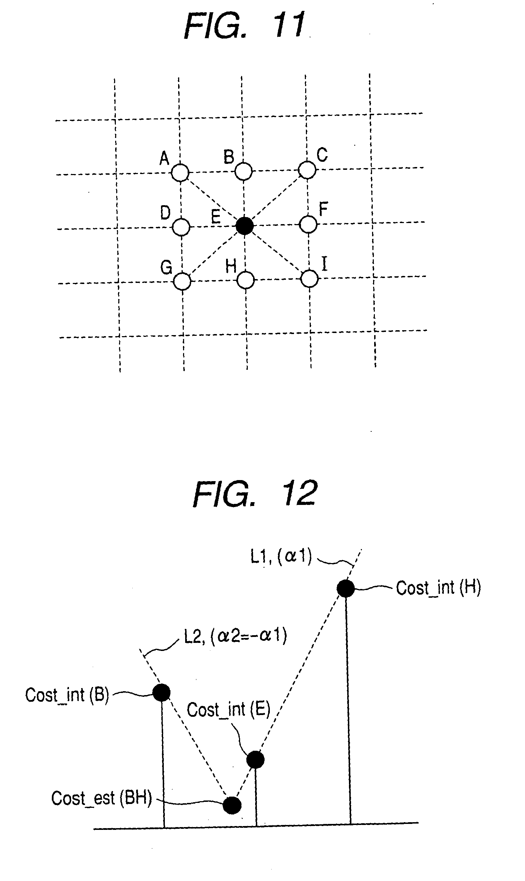

An inter mode decision circuit 43 calculates an estimation value of a cost value in a motion compensation position where the cost value becomes minimum with a precision less than one pixel based on the cost value in the rough motion compensation position detected in the rough motion prediction circuit 42, and detects the optimum mode in plural inter prediction modes by comparison of estimation values in plural inter prediction modes. Specifically, as shown in Fig. 11, on the assumption that cost values Cost (Mode) in the rough motion compensation position "E" and neighboring compensation positions "A" to "D" and "F" to "I" are represented by Cost int (X) : X= "A" to "I", when the following relational expression is true, it is judged that a minimum point of the cost value when motion prediction is performed with a 1/4 pixel precision exists between the compensation position "B" and the rough motion compensation position "E".

$$\text{Cost\_int (B)<Cost\_int (H)} \quad \text{......} \quad (25)$$

Accordingly, the inter mode decision circuit 43 calculates an estimation value of the cost value based on the cost value according to the rough motion compensation position and the cost values according to neighboring compensation positions. Specifically, the inter mode decision circuit 43 detects a minimum value of the cost value by representing variation of the cost values by the linear function in which the sign of the gradient is switched at a minimum point with respect to a direction in which the rough motion compensation position "E" is connected with two opposite neighboring compensation positions sandwiching the rough motion compensation position "E" in between, thereby detecting the estimation value based on the minimum point of the cost value.

In this case, the direction in which the rough motion compensation position "E" is connected with two opposite neighboring compensation positions sandwiching the rough motion compensation position "E" in between can be set with respect to four directions of a horizontal direction, a vertical direction, and oblique directions passing through the rough motion compensation position "E". As shown in Fig. 12, a point of the minimum cost value is detected with respect to each direction of these four directions according to linear approximation by the linear function. That is, the inter mode decision circuit 43 selects a cost value having a larger value by comparing a cost value Cost int (B) of the neighboring compensation position "B" with the cost value Cost int (H) of the compensation position "H" with respect to, for example, the vertical direction, thereby detecting whether the point of the minimum cost exists at the side of the point "B" of the rough motion compensation position "E" or exists at the side of the point "H" of the rough motion compensation position "E".

Also, a gradient "$\alpha 1$" of a straight line "L1" is detected, which connects the cost value Cost int (H) which is the side having a larger value selected as described above and the cost value Cost int (E) of the rough motion compensation position "E". The inter mode decision circuit 43 detects the minimum value Cost int (BH) of cost values in the vertical direction by the intersection between a straight line L2 passing through the cost value Cost int (B) which is the side having a smaller value by a gradient "$\alpha 2$" (=$-\alpha 1$) obtained by switching the sign of the gradient "$\alpha 1$" and the straight line "L1" passing through the cost value Cost int (H) and the cost value Cost int (E).

Concerning the above detection of the minimum value of the cost value, instead of the method by the linear approximation using the linear function, various methods of detecting the minimum value such as a case of detecting by the approximation using a quadratic function can be widely applied. When detecting by the approximation of the quadratic function, the direction in which these three points "B", "E" and "H" are aligned is set as "x" and the cost value in these points "B" "E" and "H" is set as "y", and these "x" and "y" are substituted for the following relational expression, then, the obtained cubic equation is solved and coefficients "a", "b" and "c" are calculated to obtain a quadratic curve equation, and the detection can be executed by detecting the minimum value from the quadratic curve equation.

$$y = ax^2 + bx + c \qquad \qquad \dots\dots \ (26)$$

The inter mode decision circuit 43 calculates minimum values of the cost value Cost int (DF), Cost int (BH), Cost int (AI), and Cost int (CG) respectively with respect to four directions of the horizontal direction, the vertical direction and the oblique directions passing through the rough motion compensation position "E" as described above, and detects an estimation value of the cost value Cost est (Mode) with respect to the mode by further detecting the minimum value from the four minimum values of cost values according to calculation processing of the following expression. It is also preferable to calculate the estimation value Cost est (Mode) by processing the minimum values of cost values by three directions instead of the calculation of the estimation value Cost est (Mode) by the processing of the minimum values of cost values by four directions. In this case, it can be considered that, for example, the minimum value of the cost value is detected with respect to either direction of two oblique directions depending on the position in which the cost value becomes minimum in the vertical direction and the horizontal direction. When sufficient precision for practical use can be secured, it is also preferable that the estimation value is detected based on only combinations in which straight lines which connect the rough motion compensation position with two opposite neighboring compensation positions have relation orthogonal to each other.

$$Cost\_est \ (Mode)$$
$$= \min \Big\{ Cost\_est(BH), Cost\_est(DF), Cost\_est(AI), Cost\_est(CG) \Big\} \ \dots\dots \ (27)$$

The inter mode decision circuit 43 decides the prediction mode in which the estimation value Cost est (Mode) is smallest by comparison of estimation values Cost est (Mode) of the cost values relating to respective prediction modes obtained as the above, and detects the optimum mode relating to the intra prediction. The optimum mode to be detected is the optimum mode for reference frames described with reference to Fig. 3, for all motion compensation blocks having different sizes described with reference to Fig. 4 and for respective macroblocks according to combination of the prediction directions. The inter mode decision circuit 43 notifies the decided result to a minute motion prediction circuit 44.

The minute motion prediction circuit 44 performs motion prediction processing according to the 1/4 pixel precision described with reference to Fig. 5 only in the prediction mode relating to the notification and calculates a true cost value by the expression (13). When the direct mode can be applied by performing bi-directional prediction in the prediction mode detected as the above, the motion prediction processing according to the 1/4 pixel precision is performed and the cost value is calculated by the expression (13). The minute motion prediction circuit 44 notifies the cost value calculated as the above to an intra/inter mode decision circuit 45. When encoding by the inter prediction is instructed from the intra/inter mode decision circuit 45, prediction values of the luminance signal and the color-difference signal are generated in the optimum mode according to the instruction to be outputted to the subtracting circuit 4.

The intra/inter mode decision circuit 45 selects the minimum cost value from various cost values outputted from the intra prediction circuit 5 and the motion prediction/compensation circuit 41 and detects the optimum mode by executing calculation processing of the following expression to decide encoding by the intra prediction or the inter prediction. When performing encoding processing by the inter prediction according to the decided result, the corresponding optimum mode is notified to the minute motion prediction circuit 44 in the motion prediction/compensation circuit 41, and output of the prediction value in the optimum mode detected in the minute motion prediction circuit 44 or output of the prediction value in the direct mode is instructed. On the other hand, when performing encoding processing by the intra prediction, the optimum mode relating to the intra prediction is notified to the intra prediction circuit 5 and output of the prediction value is instructed.

$$Best\_Mode = \underset{Mode}{\arg\min}(\ Cost(Mode\ ))$$

$$Mode \in \{\ Best\_Inter\_Mode\ ,\ Direct\_Mode\ ,\ Intra4x4\ ,\ Intra16x16\ \} \ \cdots\cdots\ (28)$$

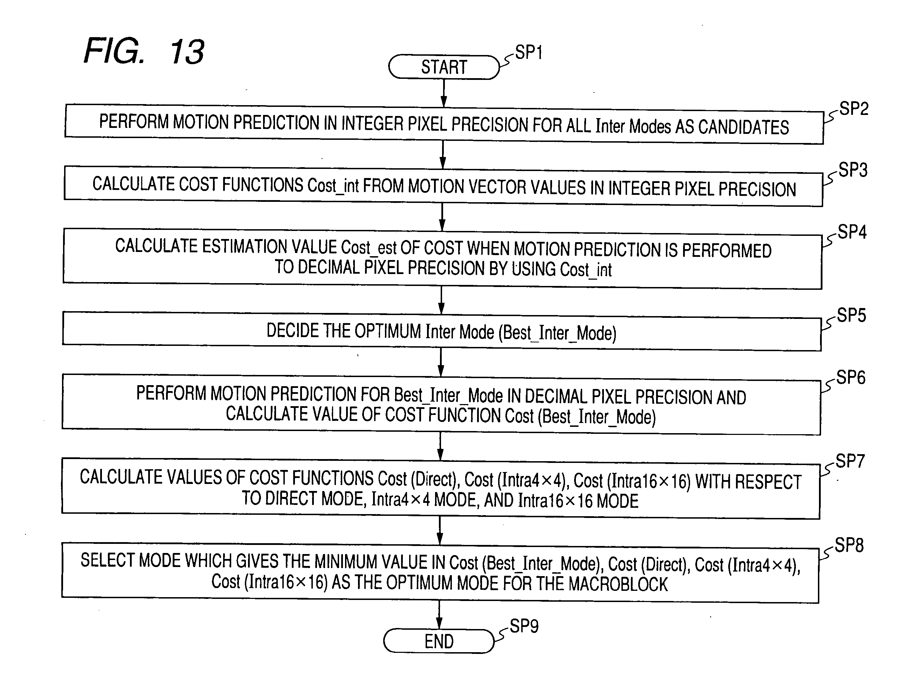

Accordingly, Fig. 13 is a flowchart showing a series of processing procedures of the encoding apparatus 40 relating to detection of the optimum mode.. The encoding apparatus 40 proceeds from step SP1 to step SP2 by executing the processing procedures at each macroblock, and performs motion prediction with the integer pixel precision with respect to all inter prediction modes as candidates, and in the next step SP3, calculates cost values respectively using motion vectors with the integer pixel precision by the motion prediction in step SP1. In the next step SP4, the estimation value of the cost value using the cost values is calculated as described above, and in step SP5, the minimum value is detected from the calculated values of step SP4 to detect the optimum inter prediction mode. In the next step SP6, the cost value is calculated by interpolation calculation processing using the actual FIR filter in the optimum inter prediction mode.

In the next step SP7, the cost values are calculated in all modes of the direct mode, the intra 4x4 prediction mode, the intra 16x16 prediction mode, and in the next step SP8, the optimum mode is selected by comparison of cost values according to the calculation in steps SP6 and SP7, then, proceeds to step SP9 to end the series of processing.

(2) Operation of the embodiment

In the above configuration, a video signal SV which is sequentially inputted in the encoding apparatus 40 (Fig. 10) is converted into a video data D1 by the analog/digital conversion circuit 2, and the video data D1 is sorted in order of processing by the picture sorting buffer 3 to be inputted to the subtracted circuit 4. Here, the video data D1 is subtracted between prediction values according to the intra prediction and the inter prediction to generate a subtracted data D2, the subtracted data D2 is sequentially processed in the orthogonal transform circuit 7, the quantization circuit 8 and the lossless encoding circuit 10 to be converted to an encoded data D4, and the encoded data D4 is recorded in a recording medium by, for example, a recording system. Also, the output data of the quantization circuit 8 is decoded into video data and recorded in the frame memory 16 as reference video, and prediction values of inter prediction and intra prediction in the motion prediction/compensation circuit 41 and the intra prediction circuit 5 according to the reference video are generated.

In the series of processing, cost values in the video data D1 are calculated by the cost function indicating encoding efficiency with respect to respective prediction modes of the inter prediction and intra prediction respectively in the motion prediction/compensation circuit 41 and the intra prediction circuit 5. Concerning the intra prediction, the optimum mode which is most suitable for encoding processing is detected by comparison of cost values in respective prediction modes. Also in the inter prediction, the optimum mode is detected by comparison of cost values in the same way, finally, the optimum prediction mode is detected according to the optimum modes in the intra/inter mode decision circuit 45. Accordingly, in the encoding apparatus 40, it is decided that the encoding processing is performed by which prediction method of the intra prediction or the inter prediction according to the optimum prediction mode. When the processing is performed by the intra prediction, a prediction value according to the optimum mode is generated in the intra prediction circuit 5 and outputted to the subtracting circuit 4. When the processing is performed by the inter prediction, a prediction value according to the optimum mode is generated in the motion prediction/compensation circuit 41 and outputted to the subtracted circuit 4. Accordingly, in the encoding apparatus 40, the optimum mode is detected from plural prediction modes of the plural intra prediction modes and plural inter prediction modes at each macro block by comparison of cost values by the cost function indicating encoding efficiency, and the video data D1 is sequentially encoded in the optimum mode.

When detecting the optimum mode of the inter prediction mode in the above processing, if the true cost value is calculated in each prediction mode, calculation processing using the 6-tap FIR filter relating to the motion compensation with the 1/4 pixel precision becomes necessary, which makes calculation processing significantly complicated.

Therefore, in the embodiment, cost values in respective prediction modes are calculated with the integer pixel precision which does not require calculation processing using the FIR filter, and the optimum mode of the inter prediction mode is detected based on the cost values. Then, cost values with the precision less than one pixel are calculated with respect to the optimum mode to detect the optimum modes in the intra prediction mode and the inter prediction mode. Accordingly, in the embodiment, it is possible to detect the optimum modes in the plural inter prediction modes and the plural intra prediction modes only by performing calculation processing using the FIR filter only with respect to the optimum mode of the inter prediction, thereby detecting the optimum mode by simple processing when video data is encoded by detecting the optimum mode using the cost function.

Specifically, in the encoding apparatus 40, motion vectors are detected with the motion-vector detecting precision of one pixel in the rough motion prediction circuit 42, and cost values are detected by the motion vectors in respective prediction modes of the inter prediction mode. And the optimum mode in plural inter prediction modes is detected based on cost values according to rough motion compensation positions relating the motion vectors in the inter mode decision circuit 43, and motion compensation is performed in the optimum mode with the precision less than one pixel in the minute motion prediction circuit 44 to calculate the cost value. In addition, the cost value by the inter prediction and cost values by the plural intra prediction modes are judged in the intra/inter mode decision circuit 45 to detect the optimum mode, accordingly, the optimum mode of the inter prediction mode is detected based on the cost value with the precision of one pixel or more, and the optimum mode in the intra prediction mode and the inter prediction mode is detected by the cost value in the optimum mode with the precision less than one pixel.

Concretely, according to the above processing, the optimum inter prediction mode is detected based on encoding processing by plural different block sizes, different reference frames and combination of forward-direction prediction, backward-direction prediction and bi-directional prediction in the inter prediction mode, and the optimum mode in the intra prediction mode and the inter prediction mode is detected from the cost value of the optimum inter prediction mode.

More concretely, in the encoding apparatus 40, an estimation value of the cost value in the motion compensation position where the cost value becomes minimum with the precision less than one pixel is calculated based on the cost value by the rough motion compensation position in each inter prediction mode in the inter mode decision circuit 43, and the optimum mode in plural inter prediction modes is detected by comparison of the estimation values. Accordingly, in the embodiment, when the cost value with the motion compensation precision less than one pixel is detected from the cost value with the pixel precision of one pixel or more, calculation processing used for calculating the estimation value is variously set so as to secure sufficient precision for practical use, thereby detecting the optimum mode of the inter prediction mode by simple processing, which simplifies the whole calculation processing.

In addition, when the cost value with the motion compensation precision less than one pixel is detected from the cost value with the pixel precision of one pixel or more, in the embodiment, the cost value in the rough motion compensation position and cost values in neighboring compensation positions of the rough motion compensation position are calculated in the rough motion compensation position 42, and the estimation value is calculated from the cost value in the rough motion compensation position and the cost values of neighboring compensation positions in the inter mode decision circuit 43, accordingly, the estimation value is detected by reflecting variation of cost values depending on the motion compensation positions, thereby detecting the inter prediction mode to be detected as the optimum mode by the true cost value accurately.

In the inter mode decision circuit 43, the minimum value of the cost value is detected by representing variation of cost values by the linear function in which the sign of the gradient is switched at the minimum point with respect to the direction in which the rough motion compensation position is connected with two opposite neighboring compensation positions sandwiching the rough motion compensation position in between, then, the estimation value is detected based on the minimum value of the cost value, thereby detecting the optimum mode with sufficient precision for practical use by simple processing.

By detecting the estimation value using the quadratic function, instead of the above detection of the estimation value using the linear function, the optimum mode can be detected with further higher precision.

Also, plural minimum values are detected by switching two opposite neighboring compensation positions, and the estimation value is detected from the minimum value of the plural minimum values, thereby detecting the optimum mode with further higher precision.

In the case that sufficient precision can be secured for practical use, plural minimum values are detected by switching two opposite neighboring compensation positions between combinations in which straight lines which connect the rough motion compensation position with two opposite neighboring compensation positions have relation orthogonal to each other, as a result, the optimum mode can be detected by further simpler processing.

When the cost value is calculated with one pixel precision as described above, in the embodiment, in the case that an adjacent motion compensation block and a motion compensation block as a process target are the same macroblock, the motion vector relating to the rough motion compensation position is set as the prediction motion vector and the cost value is calculated, thereby further simplifying the processing.

Specifically, in this case, the prediction motion vector is set by the motion vector in the adjacent motion compensation block which has been already encoded, and information of the motion vector is transmitted based on the prediction motion vector, consequently, it becomes necessary that cost values are calculated by setting prediction motion vectors with respect to all motion vectors whose setting are predicted in the adjacent motion compensation block in actuality. However, by performing the processing as the above, the number of calculation times for the cost values increases exponentially. Accordingly, in this case, the motion vector relating to the rough motion compensation position is set as the prediction motion vector to calculate the cost value, thereby securing sufficient precision for practical use and further simplifying the processing.

(3) Advantages of the embodiment

According to the above configuration, the optimum mode of the inter prediction mode is detected based on the cost value with the integer pixel precision, and the cost value with the precision less than one pixel is calculated in the optimum mode to detect the optimum modes in the intra prediction mode and the inter prediction mode, thereby detecting the optimum mode by simple processing when video data is encoded by detecting the optimum mode using the cost function.

Accordingly, when these inter prediction modes are inter prediction encoding processing which performs motion compensation by different plural block sizes, inter prediction encoding processing which performs motion compensation by using different reference frames, further, the inter prediction encoding processing by forward direction prediction, backward direction prediction and bi-directional prediction, the optimum mode can be detected by simple processing.

At this time, the estimation value of the cost value in the motion compensation position where the cost value becomes minimum with the precision less than one pixel is calculated based on the cost value in the rough motion compensation position at each inter prediction mode, and the optimum mode in plural inter prediction modes is detected by comparison of estimation values in plural inter prediction modes, thereby setting calculation processing used for the calculation of the estimation value variously to detect the optimum mode of inter prediction mode by simple processing, which simplifies the whole calculation processing.

More concretely, the cost value in the rough motion compensation position as well as cost values in neighboring compensation positions of the rough motion compensation position are calculated, and the estimation value is calculated based on the cost value in the rough motion compensation position and the cost values of neighboring compensation positions, accordingly, the estimation value is detected by reflecting variations of cost values by motion compensation positions, as a result, the inter prediction mode to be detected as the optimum mode by the true cost value can be detected accurately.

In the inter mode decision circuit 43, the minimum value of the cost value is detected by representing variation of cost values by the linear function in which the sign of the gradient is switched at the minimum point with respect to the direction in which the rough motion compensation position is connected with two opposite neighboring compensation positions sandwiching the rough motion compensation position in between, then, the estimation value is detected based on the minimum value of the cost value, thereby detecting the optimum mode with sufficient precision for practical use by simple processing.

By detecting the estimation value by using the quadratic function instead of the linear function, the optimum mode can be detected with further higher precision.

Also, plural minimum values are detected by switching two opposite neighboring compensation positions, and the estimation value is detected from the minimum value of the plural minimum values, thereby detecting the optimum mode with further higher precision.

The above switching is performed between combinations in which straight lines which connect the rough motion compensation position with two opposite neighboring compensation positions have relation orthogonal to each other, thereby detecting the optimum mode by further simpler processing.

Accordingly, by detecting the inter prediction mode of the estimation value as the minimum value from estimation values obtained as the above, the optimum modes in plural inter prediction modes can be detected by simple processing.

When the cost function used for calculation for the cost value is the function which gives the amount of code used for transmission of the motion vector with respect to the error value between the original picture and the prediction picture, and transmission of the motion vector is the transmission of motion vector in which the prediction motion vector is set by the motion vector adjacent motion compensation block which has been already encoded, and the transmission is based on the prediction motion vector, in the case that the adjacent motion compensation block and the motion compensation block as the process target are the same macroblock, the motion vector relating to rough motion compensation position detected in the rough motion compensation circuit is set as the prediction motion vector to calculate the cost value, thereby further simplifying the processing.

(4) Another embodiment

In the above embodiment, the case in which the cost value is calculated by the rough motion compensation position with one pixel precision to detect the optimum mode of the inter prediction mode has been described, however, the invention is not limited to this, and it is also preferable that the rough cost value is calculated with the integer pixel precision of 2 pixels or more when sufficient precision can be secured for practical use.

Also in the above embodiment, the case in which motion compensation of the luminance signal is performed with the 1/4 pixel precision by using the 6-tap FIR filter has been described, however, the invention is not limited to this, and it is widely applied to a case in which motion compensation is performed with the precision less than one pixel using FIR filters of the various number of taps, and further, a case in which motion compensation of the color-difference signal is performed in the same way and the like.

Also in the above embodiment, the case in which the invention is applied to Low Complexity Mode in the AVC has been described, however, the invention is not limited to this, and it is also preferable that it is applied to High Complexity Mode.

Also in the above embodiment, the case in which the invention is applied to the encoding apparatus according to the AVC has been described, however, the invention is not limited to this, and it is widely applied to a case in which encoding processing of video data is performed by detecting the optimum mode from plural intra prediction modes and plural inter prediction modes at each macroblock by comparison of cost values according to the cost function indicating encoding efficiency.

Also in the above embodiment, the case in which the invention is applied to the configuration of hardware has been described, however, the invention is not limited to this, and it can be widely applied also to a case in which video data is processed by software. A program for such encoding processing and decoding processing relating to software can be applied to, for example, a case in which the program is provided by networks such as Internet, and a case in which it is provided by various recording media such as an optical disk, a magnetic disk and a memory card.

INDUSTRIAL APPLICABILITY

The invention relates to an encoding apparatus, an encoding method, a program for the encoding method and a recording medium which records the program for the encoding method, which can be applied to a video camera, an electronic still camera, a monitoring device and the like which record imaging results by motion pictures.

**Claims**

1. An encoding apparatus which detects the optimum mode used for encoding processing from plural intra prediction modes and plural inter prediction modes at each macroblock by comparison of cost values according to a cost function indicating encoding efficiency, and performs encoding processing of video data in the optimum mode, comprising:

   a rough motion prediction circuit detecting a motion vector with an integer pixel precision and calculating the cost value in a rough motion compensation position by the motion vector in each inter prediction mode;
   an inter mode decision circuit detecting the optimum mode in the plural inter prediction modes based on the cost value in the rough motion compensation position;
   a minute motion prediction circuit calculating the cost value by performing motion compensation with a precision less than one pixel with respect to the optimum mode detected by the inter mode decision circuit; and
   an intra/inter mode decision circuit detecting the optimum mode used for the encoding processing by comparison of the cost value by the minute motion prediction circuit and the cost value by the plural intra prediction modes.

2. The encoding apparatus according to claim 1,
   wherein the plural inter prediction modes is inter prediction encoding processing performing motion compensation according to different plural block sizes.

3. The encoding apparatus according to claim 1,
   wherein the plural inter prediction modes is inter prediction encoding processing performing motion prediction by using different reference frames.

4. The encoding apparatus according to claim 1,
   wherein the plural inter prediction modes is inter prediction encoding processing by a forward-direction prediction, a backward direction prediction and bi-directional prediction.

5. The encoding apparatus according to claim 1,
   wherein the inter mode decision circuit
   calculates an estimation value of the cost value in a motion compensation position where the cost value becomes minimum with the precision of less than one pixel in each inter prediction mode based on the cost value in the rough motion compensation position, and
   detects the optimum mode in the plural inter prediction modes by comparison of the estimation values in the plural inter prediction modes.

**6.** The encoding apparatus according to claim 5,
wherein the rough motion prediction circuit
calculates the cost value in the rough motion compensation position as well as the cost values in neighboring compensation positions of the rough motion compensation position in each inter prediction mode, and
wherein the inter mode decision circuit calculates the estimation value from the cost value in the rough motion compensation position and the cost values in the neighboring compensation positions in each inter prediction mode.

**7.** The encoding apparatus according to claim 6,
wherein the inter mode decision circuit detects the minimum value of the cost value by representing variation of cost values by the linear function in which the sign of the gradient is switched at the minimum point with respect to the direction in which the rough motion compensation position is connected with two opposite neighboring compensation positions sandwiching the rough motion compensation position in between, and detects the estimation value based on the minimum value of the cost value.

**8.** The encoding apparatus according to claim 6,
wherein the inter mode decision circuit detects the minimum value of the cost value by representing variation of cost values by the quadratic function with respect to the direction in which the rough motion compensation position is connected with two opposite neighboring compensation positions sandwiching the rough motion compensation position in between, and detects the estimation value based on the minimum value of the cost value.

**9.** The encoding apparatus according to claim 7,
wherein the inter mode decision circuit detects plural minimum values by switching two opposite neighboring compensation positions and detects the estimation value based on the minimum value in the plural minimum values.

**10.** The encoding apparatus according to claim 8,
wherein the inter mode decision circuit detects plural minimum values by switching two opposite neighboring compensation positions and detects the estimation value based on the minimum value in the plural minimum values.

**11.** The encoding apparatus according to claim 9,
wherein the switching of two opposite neighboring compensation positions is the switching between combinations in which straight lines which connect the rough motion compensation position with two opposite neighboring compensation positions have relation orthogonal to each other.

**12.** The encoding apparatus according to claim 10,
wherein the switching of two opposite neighboring compensation positions is the switching between combinations in which straight lines which connect the rough motion compensation position with two opposite neighboring compensation positions have relation orthogonal to each other.

**13.** The encoding apparatus according to claim 5,
wherein the inter mode decision circuit detects the optimum mode in the plural inter prediction modes by detecting the inter prediction mode of the estimation value as the minimum value from estimation values in the plural inter prediction modes.

**14.** The encoding apparatus according to claim 1,
wherein the cost function is the function which gives the amount of code used for transmission of the motion vector with respect to an error value between an original picture and a prediction picture,
wherein the transmission of the motion vector is the transmission of motion vector in which a prediction motion vector is set by the motion vector in an adjacent motion compensation block which has been already encoded, and the transmission is based on the prediction motion vector, and
wherein the rough motion compensation circuit, in the case that the adjacent motion compensation block and a motion compensation block as a process target are the same macroblock, sets a motion vector relating to rough motion compensation position detected in the rough motion prediction circuit as the prediction motion vector to calculate the cost value.

**15.** The encoding apparatus according to claim 1,
wherein the minute motion prediction circuit calculates the cost value by performing motion compensation with a 1/4 pixel precision using a FIR filter having the prescribed number of taps.

**16.** The encoding apparatus according to claim 1,
wherein the plural intra prediction modes are an intra 4x4 prediction mode and an intra 16x16 prediction mode.

**17.** An encoding method which detects the optimum mode used for encoding processing from plural intra prediction modes and plural inter prediction modes at each macroblock by comparison of cost values according to a cost function indicating encoding efficiency, and performs encoding processing of video data in the optimum mode, comprising:

a rough cost value calculation step detecting a motion vector with an integer pixel precision and calculating the cost value in a rough motion compensation position by the motion vector in each inter prediction mode;
an inter mode decision step detecting the optimum mode in the plural inter prediction modes based on the cost value in the rough motion compensation position;
a minute cost value calculation step calculating the cost value by performing motion compensation with a precision less than one pixel with respect to the optimum mode detected by the inter mode decision step; and
an intra/inter mode decision step detecting the optimum mode used for the encoding processing by comparison of the cost value by the cost value calculation step and the cost value by the plural intra prediction modes.

**18.** A program for an encoding method including an optimum mode detecting step detecting the optimum mode from plural intra prediction modes and plural inter prediction modes at each macroblock by comparison of cost values according to a cost function indicating encoding efficiency, and an encoding processing step performing encoding processing of video data in the optimum mode,
wherein the optimum mode detecting step comprises:

a rough cost value calculation step detecting a motion vector with an integer pixel precision and calculating the cost value in a rough motion compensation position by the motion vector in each inter prediction mode;
an inter mode decision step detecting the optimum mode in the plural inter prediction modes based on the cost value in the rough motion compensation position;
a minute cost value calculation step calculating the cost value by performing motion compensation with a precision less than one pixel with respect to the optimum mode detected by the inter mode decision step; and
an intra/inter mode decision step detecting the optimum mode used for the encoding processing by comparison of the cost value by the minute cost value calculation step and the cost value by the plural intra prediction modes.

**19.** A recording medium which records a program for an encoding method executed by a calculation processing means,
wherein the program for the encoding method includes
an optimum mode detecting step detecting the optimum mode from plural intra prediction modes and plural inter prediction modes at each macroblock by comparison of cost values according to a cost function indicating encoding efficiency, and
an encoding processing step performing encoding processing of video data in the optimum mode, and
wherein the optimum mode detection step comprises:

a rough cost value calculation step detecting a motion vector with an integer pixel precision and calculating the cost value in a rough motion compensation position by the motion vector in each inter prediction mode;
an inter mode decision step detecting the optimum mode in the plural inter prediction modes based on the cost value in the rough motion compensation position;
a minute cost value calculation step calculating the cost value by performing motion compensation with a precision less than one pixel with respect to the optimum mode detected by the inter mode decision step; and
an intra/inter mode decision step detecting the optimum mode used for the encoding processing by comparison of the cost value by the minute cost value calculation step and the cost value by the plural intra prediction modes.

# FIG. 1

EP 1 802 125 A1

# FIG. 2

EP 1 802 125 A1

# FIG. 3

EP 1 802 125 A1

FIG. 4A1

16

16     0

FIG. 4A2

16

8     0

8     1

FIG. 4A3

8     8

16     0     1

FIG. 4A4

8     8

8     0     1

8     2     3

FIG. 4B1

8

8     0

FIG. 4B2

8

4     0

4     1

FIG. 4B3

4     4

8     0     1

FIG. 4B4

4     4

4     0     1

4     2     3

# FIG. 5

| A | e1 | b |  | A |
|---|----|---|--|---|
|   | e2 | e3 |  |  |
| d |    | c  |  | d |
|   |    |    |  |  |
| A |    | b  |  | A |

# FIG. 6

## FIG. 7A

## FIG. 7B

## FIG. 8A

## FIG. 8B

# FIG. 9

TDD

TDB

B PICTURE

MVcol

MVl0

Co-located
Block

MVl1

L0

L1

t

FIG. 10

EP 1 802 125 A1

# FIG. 11

# FIG. 12

# FIG. 13

START —⟨SP1⟩

↓

PERFORM MOTION PREDICTION IN INTEGER PIXEL PRECISION FOR ALL Inter Modes AS CANDIDATES —SP2

↓

CALCULATE COST FUNCTIONS Cost_int FROM MOTION VECTOR VALUES IN INTEGER PIXEL PRECISION —SP3

↓

CALCULATE ESTIMATION VALUE Cost_est OF COST WHEN MOTION PREDICTION IS PERFORMED TO DECIMAL PIXEL PRECISION BY USING Cost_int —SP4

↓

DECIDE THE OPTIMUM Inter Mode (Best_Inter_Mode) —SP5

↓

PERFORM MOTION PREDICTION FOR Best_Inter_Mode IN DECIMAL PIXEL PRECISION AND CALCULATE VALUE OF COST FUNCTION Cost (Best_Inter_Mode) —SP6

↓

CALCULATE VALUES OF COST FUNCTIONS Cost (Direct), Cost (Intra4×4), Cost (Intra16×16) WITH RESPECT TO DIRECT MODE, Intra4×4 MODE, AND Intra16×16 MODE —SP7

↓

SELECT MODE WHICH GIVES THE MINIMUM VALUE IN Cost (Best_Inter_Mode), Cost (Direct), Cost (Intra4×4), Cost (Intra16×16) AS THE OPTIMUM MODE FOR THE MACROBLOCK —SP8

↓

END —⟨SP9⟩

## INTERNATIONAL SEARCH REPORT

<table>
<tr><td colspan="2">International application No.</td></tr>
<tr><td colspan="2">PCT/JP2005/016571</td></tr>
</table>

A. CLASSIFICATION OF SUBJECT MATTER
*H04N7/32* (2006.01)

According to International Patent Classification (IPC) or to both national classification and IPC

B. FIELDS SEARCHED

Minimum documentation searched (classification system followed by classification symbols)
*H04N7/24* (2006.01)-*H04N7/68* (2006.01)

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-284091 A (Toshiba Corp.), | 1-4,14-19 |
| Y | 03 October, 2003 (03.10.03), | 5-13 |
| | Par. Nos. [0045], [0073] | |
| | (Family: none) | |
| Y | JP 5-110927 A (Sony Corp.), | 5-13 |
| | 30 April, 1993 (30.04.93), | |
| | Full text; all drawings | |
| | (Family: none) | |
| Y | JP 9-187013 A (Sony Corp.), | 5-13 |
| | 15 July, 1997 (15.07.97), | |
| | Par. Nos. [0006] to [0014]; Fig. 2 | |
| | (Family: none) | |

[X] Further documents are listed in the continuation of Box C.    [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
31 October, 2005 (31.10.05)

Date of mailing of the international search report
08 November, 2005 (08.11.05)

Name and mailing address of the ISA/
Japanese Patent Office

Authorized officer

Facsimile No.

Telephone No.

Form PCT/ISA/210 (second sheet) (April 2005)

31

**INTERNATIONAL SEARCH REPORT**

International application No.

PCT/JP2005/016571

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-112871 A  (Sony Corp.),<br>23 April, 1999 (23.04.99),<br>Par. Nos. [0047] to [0051]; Fig. 3<br>(Family: none) | 5-13 |
| A | JP 6-326980 A  (Sony United Kingdom Ltd.),<br>25 November, 1994 (25.11.94),<br>Full text; all drawings<br>& US 5485224 A1          & GB 2277000 A | 5-13 |
| A | JP 2004-241957 A  (Sony Corp.),<br>26 August, 2004 (26.08.04),<br>Full text; all drawings<br>(Family: none) | 1-19 |
| A | Thomas Wiegand, "Joint Model Number 1, Revision<br>1(JM-1r1)", Joint Video Team (JVT) of ISO/IEC<br>MPEG and ITU-T VCEG Pattaya, Thailand, 3-7<br>December 2001, [JVT-A003r1], pages 54 to 61 | 1-19 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003230149 A